# EUROPEAN PATENT SPECIFICATION

(11) **EP 0 728 102 B1**
(45) Date of publication and mention of the grant of the patent: **24.02.1999**
(21) Application number: 94900670.4
(22) Date of filing: 19.11.1993
(51) Int. Cl.: B65B 11/04, B29C 59/04

(54) **METHOD AND APPARATUS FOR MANUFACTURING OF A STRETCH FILM**
VERFAHREN UND VORRICHTUNG ZUM HERSTELLEN EINER STRECKFOLIE
PROCEDE ET APPAREIL POUR FABRIQUER UN FILM A ETIRER

(43) Date of publication of application: 28.08.1996
(73) Proprietor: Saltech Inc., Bridgetown (BB)
(72) Inventor: SALZSAULER, Donald, J., Georgetown, Ontario L7G 4T1 (CA); SALZSAULER, Richard, G., Georgetown, Ontario L7G 4T1 (CA)
(74) Representative: Hitchcock, Esmond Antony
(86) International application number: CA9300497
(87) International publication number: WO9513965

(56) References cited:
- DE-B- 1 093 547
- DE-B- 2 100 330
- US-A- 4 166 589
- US-A- 4 499 706
- US-A- 4 628 667
- US-A- 4 895 760
- US-A- 5 003 752
- US-A- 5 016 427
- US-A- 5 040 356
- DATABASE WPIL, no. 94-043 318 DERWENT PUBLICATIONS LTD., London; & CA-A-2 068 908 (SALZ- SAULER),

## Description

This invention relates to methods and apparatus for producing rolls of stretched film, particularly such film having an embossed or impressed surface for trapping air so as to facilitate subsequent unwinding of the film. The formation of an embossed surface on one side of a thermoplastic film for this purpose is disclosed in U.S.-A-4,895,760. Stretched film is used for example, in wrapping pallet loads.

Various methods and apparatus for packaging and shipping goods have been proposed and implemented in the past. For example, boxes may be stacked onto a pallet and a web of plastic film may be applied about the pallet load. Such plastic film may be stretched as the plastic film rotates about the pallet load. Alternately, the plastic film may be pre-stretched between rollers prior to being wrapped around the pallet load.

U.S.-A-5,040,356 relates to a method and apparatus for producing a roll stretched plastic film in which a web of unstretched film is fed to and stretched by a roll of mechanism. The apparatus disclosed in this document includes a stretching device incorporated into a stretch wrap machine for producing stretched plastic for wrapping a load. Means are provided for stretching a sheet of stretchable plastic material at an angle across one or more stretching devices. The method comprises stretching the plastic over a plurality of generatrices in substantially parallel arrangement, moving the generatrices in an eccentric path about a central axis and moving the generatrices in the axial directions in staggered coordination. US-A-5,016,427 provides a process for feeding packaging film to a wrapping machine. The film is fed to an upstream and downstream main roller defining between them a passage. As the film is fed towards the rollers, upstream and downstream guide rollers are located at positions nearest the entry and exit sides of the passage. There is also a reference to making creases in the longitudinal edges of the film in the unwinding phase with the intention of preventing tearing.

Hand-held devices for dispensing plastic film for wrapping stacked items have also been used in the past as described in U.S.-A-4,166,589. Such hand actuated devices include braking mechanisms to stretch the film as it winds around a stack. U.S.-A-5,003,752 relates to a plastic film which is stretched breadthwise and longitudinally just before it is wound around a load of wrapping. Stretching of the film is performed by passing the film between stretching rolls each having alternate peripheral ridges and grooves and arranging such the ridges on each roll mesh with the grooves on the other roll.

U.S.-A- 4,499,706 teaches a double layer thermal plastic film which is used in pass through stretch wrapping of goods. The double layer improves the tear resistance and puncture resistance of the film.

Various attempts have heretofore been made to pre-stretch a web of plastic material and rolling said stretched or pre-stretched film around a core for later use. Such stretched rolls of course could be advantageously used by either manually applying the stretched film in a manner disclosed in U.S.-A-4,166,589 or by applying same by automated means such as a machine or the like. The use of a roll of stretched film could be cost effectively utilized in a pallet wrapping machine by obviating the need for expensive pre-stretched carriages such as that disclosed in U.S.-A-4,628,667.

Previous attempts to produce rolls of stretched plastic materials which may later be used to wrap pallet loads including those described above have found limited utility for a number of reasons including:
(a) the film which is stretched has a tendency to retain a "memory" which tends to cause the stretched film to contract into its original length as the film recovers. Accordingly, film which has been stretched and then rolled tends to "weld" together making it difficult to unwrap stretched rolled film without ripping same;
(b) stretched film which has been rolled tends to tear easily since such film is under tension and may be easily torn by nicking or stressing the edges of the rolled film.

The present invention seeks to provide methods and apparatus for producing a roll of stretched film which is easier to unwind when required to wrap pallet loads and which has strengthened tear characteristics than that presently available by the prior art. To this end, and according to the invention, two opposite sides of the film are folded to strengthen the edges, and the roller means used to stretch the film includes at least one textured roller which embosses the film during stretching. The folding of the side edges of the film is normally completed prior to the film being stretched and embossed. The stretched and embossed film, with the folded edges, is rolled onto a core to trap air in the rolled film.

The rolling means preferably comprises a core for the rolled film rotatably engageable with the driving means. Oscillating means can be included for oscillating the core between two limits as it rotatably receives the stretched and embossed film so as to minimise piling up of the folded edges.

The invention will now be described by way of example and with reference to the accompanying drawings wherein:
Figure 1 illustrates a prior art roll of stretched film;
Figure 2 illustrates a roll of film stretched and embossed in accordance with the invention described herein;
Figure 3 is a perspective view of roller means for embossing the film of Figure 2;
Figure 4 is a partial side view of the textured surface of the embossing roller of Figure 3;
Figure 5 is a perspective view of an apparatus according to the invention for producing a stretched and embossed roll of plastic film;
Figure 6 is a rear side elevational view of the apparatus of Figure 5;
Figures 7a and 7b are side elevational views of the adjustable pulleys of Figures 5 and 6;
Figure 8 is a section view through the core around which the stretched and embossed film is wound;
Figure 9 illustrates a manual application of the stretched and embossed film
Figure 10 is a side elevational view illustrating automated means for utilizing the stretched and embossed film described herein.
Figure 11 is another view of the take up roll and core.

In the figures like numerals represent like elements.

Although the preferred web material utilized herein comprises of stretchable plastic film and particularly linear low density polyethylene (LLD) other materials may be utilized.

It is known that most plastic films when stretched above their yield point gain significantly in ultimate strength. Such stretched plastic film will have a "memory". For example, a stretched film having a 10% memory will shrink 10% of its stretched length. Such memory assists in the holding of palletized articles wrapped with stretched film as the memory or tendency to shrink will assist in holding the articles together under compression.

However, the memory characteristics of stretched film which has been rolled will cause the surface 6 of successive wraps of the stretchable material 4 to "weld" together making it difficult to unwrap the stretchable material 4 from the roll 2 of stretched film.

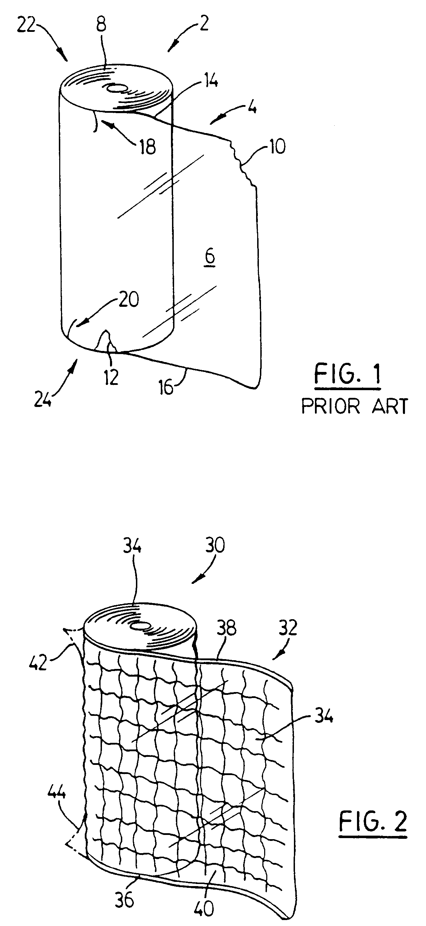

Figure 1 illustrates a roll 2 of web material 4 which has been stretched and then rolled in accordance with prior art teachings.

Prior art rolls 2 of stretched film 4 tend to present torn portions 10 or 12 when unwrapped. Moreover, rolls 2 of stretched film 4 exhibited by the prior art present a web of material 4 which is under tensile stress and accordingly the opposite side edges 14 and 16 may be easily torn as illustrated by 18 and 20 particularly when the ends 22 and 24 of roll 2 accidentally hit or contact another surface.

Figure 2 illustrates a roll 30 of stretched film 32 having an embossed surface 34 in accordance with the invention to be described herein.

The roll 30 of stretched film 32 has two opposite ends 34 and 36 defined by rolled folded edges 38 and 40. The folded edges 38 and 40 strengthen the edges of the rolled film 30 so as to strengthen the tear characteristics of the edges 38 and 40 of the rolled film 30. The folded edges 38 and 40 inhibit the formation of tears 18 and 20 which are characteristic of prior art rolls of stretched film as illustrated in figure 1.

Moreover, the roll 30 of stretched film 32 is rolled in a manner so as to minimize the piling up of the folded edges 38 and 40 which is illustrated by phantom lines and numerals 42 and 44 of figure 2. More particularly, the web of film 32 is oscillated between two limits 46 and 48 in a manner to be more fully described herein.

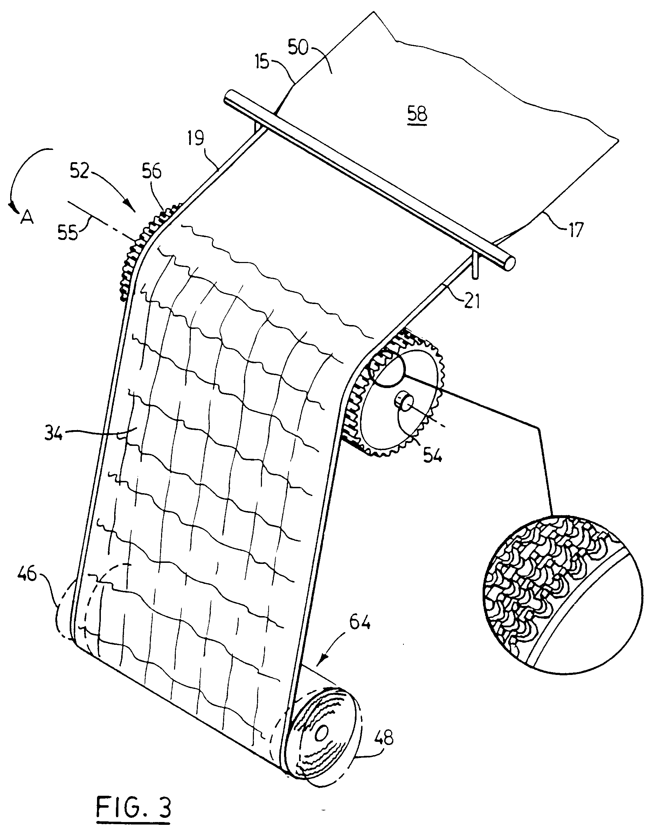

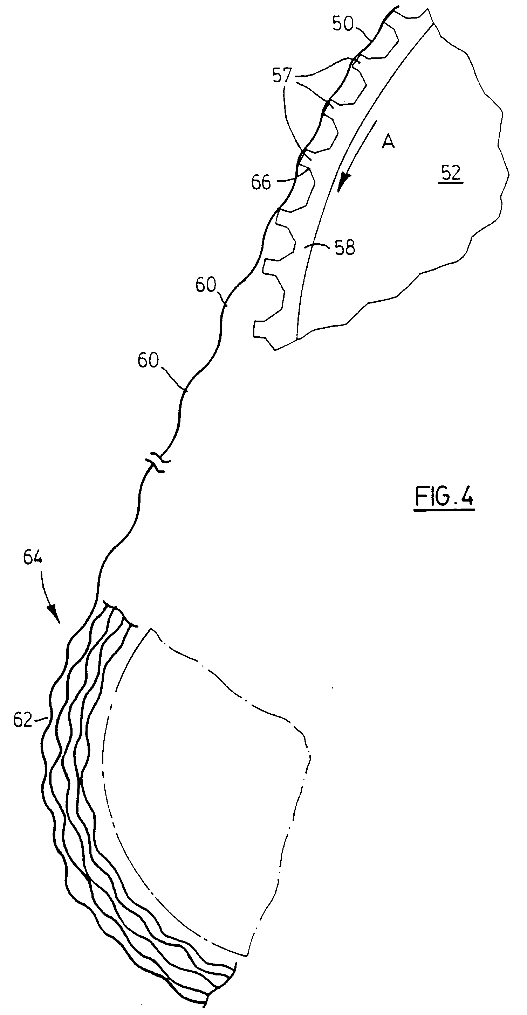

Figures 3 and 4 are illustrative of the invention described herein. More particularly, a web of stretchable plastic material or film 50 which may be unrolled from a roll of unstretched plastic film (not shown) is fed towards textured roller means 52. Textured roller means 52 includes a rotatable shaft 54 which is rotatable about an axis 55 in the direction of arrow A. Textured roller means 52 includes a textured cylindrical surface 56 which is associated with the shaft 54 and also rotatable about axis 55.

The enlarged view of Figure 3 as well as Figure 4 best illustrate the texture of the textured roller means 52.

Figure 4 best illustrates the stretching and embossing imparted or impressed by textured roller means 52. In particular, the web of stretchable material 50 is frictionally engaged by the textured surface 56 of textured roller means 52 so as to stretch and emboss the surface 58 of stretchable film 50.

In the preferred embodiment described herein, the web of plastic film 50 is stretched in the direction of travel by approximately 200%. In other words, 30.48 cm (one foot) of unstretched plastic film is stretched to approximately 91.44 cm (three feet) of stretched plastic film by textured roller means 52.

The textured roller means 52 has a textured rubber surface 57 which presents a patterned contour designed to impress a pattern onto the film 50. In particular, the embossed surface 56 of textured roller means 52 presents a predetermined pattern for embossing the surface of stretchable film 58 as it is stretched about textured roller means 52. In particular, the textured surface 57 of textured roller means 52 embosses or raises portions of surface 58 so as to present a series of impressed pockets 60 which trap air 62 when the stretched embossed film 50 is wrapped around so as to present roll 64. The textured surface 56 presents a series of raised portions 57 which raise portions of film 50. More particularly, the textured surface 56 presents a roughened contour 66 which impresses or embosses a textured surface onto the web of stretchable material 50 so as to trap a cushion of air between adjacent wraps of the rolled film and thereby facilitate later unwinding of the roll 64 of stretched embossed film for wrapping pallet loads.

The textured surface 56 illustrated in the drawings of the preferred embodiment is made by helically wrapping a rubberized conveyor belt (not shown) having the texture or contour illustrated about the cylindrical surface of the roller and adhesively securing same to the roller. The conveyor belt presents the textured contour as illustrated in the drawings. Thereafter, the textured surface 56 may be smoothed by inserting same into a lathe so as to produce a textured surface having a common outside diameter.

As referred to above, the roll 64 of stretched embossed film 50 traps air 62 in the pockets impressed or embossed by textured roller means 52 so as to present a cushion of air which minimizes or inhibits the welding characteristics of wraps of rolled stretched film thereby facilitating the later unwinding of said stretched embossed film for wrapping pallet loads.

Moreover, the web of stretchable material 50 presents opposite side edges 15 which are folded in a manner to be described herein so as to present folded edges 19 and 21 respectively. Thereafter the textured roller means 52 emboss the surface 58 of stretchable material 50.

The textured pattern 34 which has been impressed or embossed by textured roller means 52 and the folded edges 19 and 21 trap air between successive wraps of stretched film 64 so as to facilitate later unwinding of same.

The rolls of stretched embossed film 64 which have been stretched approximately 200% are significantly lighter in weight than the comparable length of unstretched plastic film. Moreover, the stretched roll of embossed film 64 exhibits increased strength characteristics due to stretching as well as exhibiting increased tear characteristics along the folded edges 19 and 21. Alternatively, the roll 64 could be stationary and the film could be oscillated between two positions.

Moreover, as the stretched embossed film is wound into roll 64, the roll 64 is oscillated between two positions 46 and 48 so as to minimize piling up of folded edges 19 and 21.

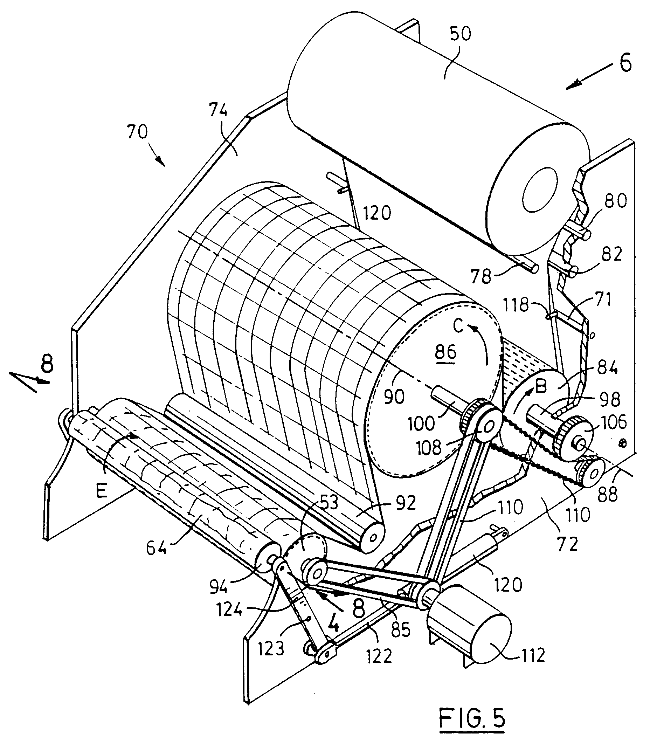

Figure 5 is a perspective view of apparatus 70 for producing a roll 64 of stretched embossed film for wrapping pallet loads.

In particular, apparatus 70 includes two spaced side plates 72 and 74 which are held in spaced relationship by rods 76. Apparatus 70 includes idler rollers 78 and 80 which are adapted to receive a roll of stretchable film. The roll of stretchable film 50 is adapted to frictionally engage idler 82 for frictional contact with the textured roller means 52. In particular, the texture roller means 52 comprise a first textured roller 84 and a second textured roller 86. Although the remaining paragraphs describe the apparatus in relation to a first textured roller 84 and a second textured roller 86, the requirement of the first textured roller 84 is optional and the apparatus described herein may be utilized with only one textured roller 86 with first textured roller 84 being optional. In such case the first roller 84 could be comprised of a normal prior art roller with the stretching occurring between rollers 86 and 84.

In the embodiment illustrated in Figure 5, first textured roller 84 is adapted for rotation about a first shaft 98 having an axis of rotation 88 in the direction of arrow B while second textured roller 86 is adapted for rotation about a second shaft 100 having an axis of rotation 90 in the direction of arrow C. In particular, first textured roller 84 is rotated in a clockwise direction about axis 88 while second textured roller 86 is rotated in a counterclockwise direction about axis 90 as illustrated in Figure 5.

The diameter of first textured roller 84 and second textured roller 86 and the relative revolutions per minute of each is selected so as to cause the web of plastic film 50 to be stretched between first textured roller 84 and second textured roller 86 by a predetermined amount. The relative spacing between first textured roller 84 and second textured roller 86 is selected so as to minimize the "neck downs" of the film as it is stretched between said first and second textured rollers 84 and 86. For example, a 20" width of roll of unstretched plastic film will contract to a width of approximately 18" when stretched between first textured roller 84 and second textured roller 86 by controlling spacing 92 between said first and second textured rollers 84 and 86 between 1" and 2".

The textured rollers 84 and 86 emboss or impress a textured surface from the textured rollers 84 and 86 onto the surface 58 of stretchable material 50 in a manner as described above. The stretched embossed film 50 is then wound around idler roller 92 and then rotatably received around a core 94 so as to produce a roll 64 of stretched embossed textured film.

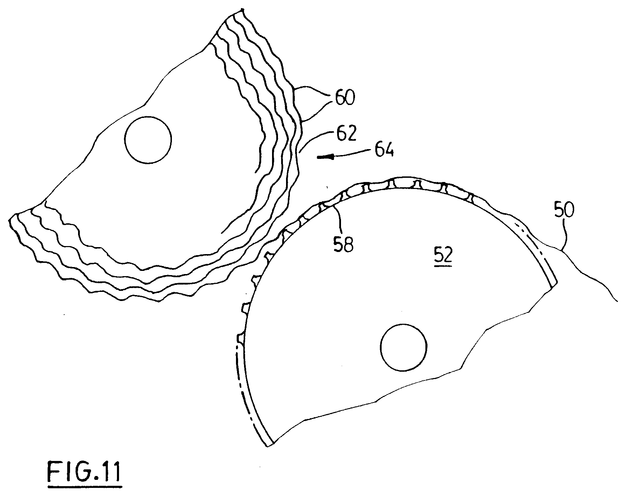

A roller 53 is used to frictionally rotate core 94 so as to roll or wind the stretched embossed plastic about core 94 and produce the roll 64. Figures 5 and 11 illustrate that roller 53 is driven by means of motor 112 through a drive mechanism comprising of pulley 83 and belt 85. The roller 53 contacts the core 94 as shown in Figure 11 and winds or rolls the stretched embossed film onto core 64.

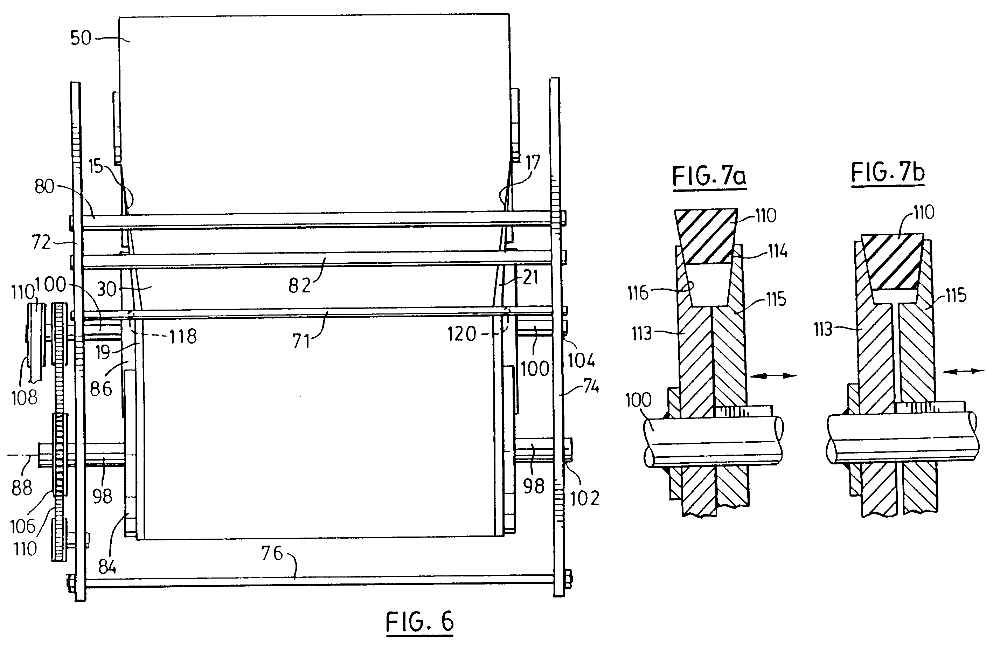

First textured roller 84 and second textured roller 86 present first shaft 98 and second shaft 100 respectively which extend through apertures 102 and 104 respectively located in side plates 72 and 74 as shown in Figure 6. First shaft 98 and second shaft 100 include first pulley means 106 and second pulley means 108 which are connected together by means of an endless belt 110 which is engageable with a motor 112 for relative rotational movement of said first textured roller 84 and second textured roller 86. Although the preferred embodiment illustrates the use of pulleys and an endless belt, any number of well known means such as gears or the like may also be utilized in accordance with this invention. Moreover, the endless belt 110 utilized in the preferred embodiment has a tapered end 114 as illustrated in Figure7 which may be adjustably driven further into the tapered slot 116 of pulley 106 in a manner well known in the art so as to adjust or fine tune the relative speeds and hence the degree of stretching of the web of plastic film 50 to a desired level. For example, by adjusting the pulley, plates 113 and 115 close together as shown in Figure 7a, this causes the endless belt to ride higher up in the slot 116. Alternatively, one may adjust the pulley plates 113 and 115 further apart as in Figure 7B so as to cause the belt to ride lower onto the pulley. Accordingly, the relative speed and hence the amount of stretching between the rollers 84 and 86 may be controlled.

Side plates 72 and 74 present a rod 71 which include folding finger means 118 and 120 projecting inwardly from the side plates 72 and 74 respectively so as to cause the edges 15 and 17 respectively of the web of plastic film 50 to be folded thereby presenting folding side edges 19 and 21 prior to stretching and embossing of the surface 58 of web 50. The fingers 118 and 120 may be adjusted along rod 71 to control the amount of folding.

Apparatus 70 also includes an air pressure cylinder 120 having an arm 122 activated by air pressure causing arm 124 to pivot about pivot 123 inwardly in the direction of arrow E. This causes the core 94 to bear against roll 53 to regulate the proper tension and rolling of stretched embossed film about core 94.

Moreover, pulley 83 also includes the pulley adjusting mechanism shown in Figures 7a and 7b so that the relative speed of roller 53 and be adjusted. For example, by driving the belt 85 deeper into the pulley 83 the speed of roller 53 increases thereby causing the stretched embossed plastic film to be wound tighter around core 94 thereby presenting a roll 64 which is smaller in diameter than if the belt rides higher in the pulley as shown in Figure 7a. Accordingly, one may produce a roll 64 which has a larger or smaller diameter for a given length of stretched embossed film depending on the speed of the rotation of roll 53 (i.e. by adjusting the pulley mechanism similar to Figures 7a and 7b). In other words, the amount of air that is trapped in the layer of wrapped film may be controlled.

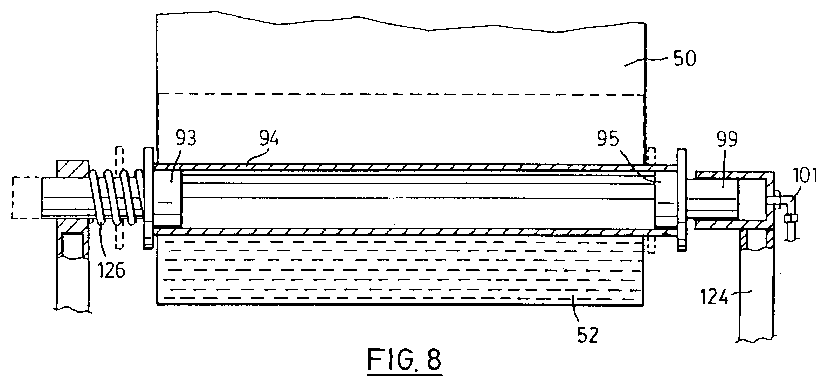

Moreover, a shown in Figure 8, a spring 126 is associated with hollow core 94 whereby the core 94 is oscillated between two limit positions 46 and 48 by oscillating means so as to cause the folded edges 19 and 21 to wander in a helical path thereby minimizing the piling up of the edges 19 and 21 as the stretched embossed film 50 is rolled about core 94. The spring 126 is utilized to assist in the oscillating motion.

The oscillating means is more particularly described in Figure 8 which consists of two arms 124 and 125. The arm 125 includes a shaft presenting a spring 126 with cap 93. The arm 124 also includes a cylinder which is adapted to receive cap 95 having a piston 98 reciprocating between two limit positions of air cylinder having a chamber communicating with air pressure conduit pipe 101. In particular, air under pressure is cyclically repetitively inserted through pipe 101 so as to enter the chamber to bear against piston 99 and thereby move cap 95. The caps 95 and 93 are inserted into the opposite hollow ends of core 94. As the cap 95 is reciprocally activated between the two limit positions illustrated by numerals 46 and 48 of Figure 3, the stretched embossed film 50 is wrapped around the core 94 so as to minimizing piling up as previously described.

Although the invention is described in relation to the core 94 reciprocating between two limit positions, another embodiment of the invention would include keeping the core 94 stationary and moving the stretched embossed plastic 50 between two limit positions.

The pulley 102 is also engageable with the shaft 93 in a manner so as to take up or roll the stretched embossed plastic film.

The method of producing a roll of stretched film for wrapping pallet loads as described herein includes the steps of; feeding a web of stretchable film 50 which has two opposite side edges 15 and 17; folding the edges 15 and 17 by means of folding fingers 118 and 120 so as to present folded edges 19 and 21 respectively to strengthen the edges 19 and 21; then stretching and embossing the folded web by first and second textured rollers 84 and 86 as described above; then rolling said stretched embossed film onto a core 94 so as to trap air in the embossed pockets 64 and folded edges 19 and 21; oscillating the core 94 between two limits 46 and 48 so as to minimize piling up of the folded edges of the rolled film 64.

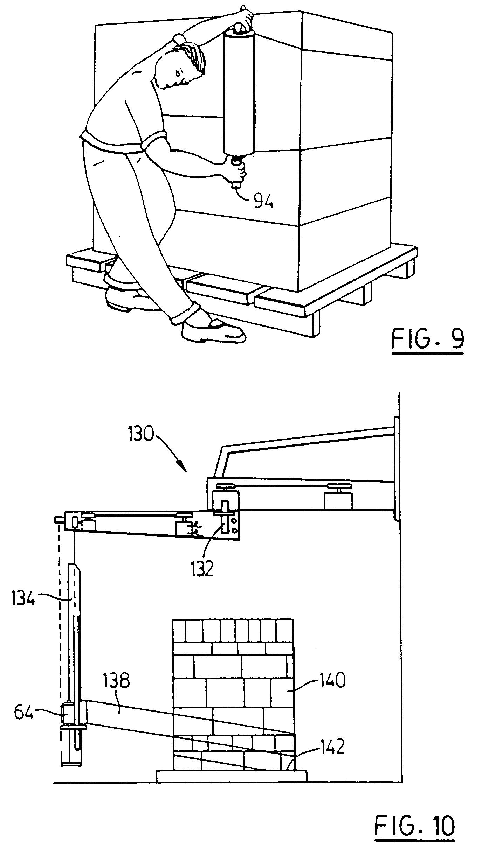

The roll 30 of stretched embossed film 32 as illustrated in Figure 2 may then be applied by hand as illustrated in Figure 9. In the embodiment illustrated in Figure 9, the finished product consists of the wrapped stretched embossed film wrapped around core 94 which can be removed from the apparatus shown in Figure 5.

The core may be comprised of a hollow core made of a variety of materials including paper. In the preferred embodiment the core is made of paper and coated with silicone. Accordingly when the roll 64 wrapped around core 94 is applied by hand the user may easily apply same since the core will easily rotate in the user's hand due to the silicone which reduces frictional drag. Moreover, since the film has been stretched and embossed and rolled about core 94, the film is easily removed from core 94 without sticking and the roll 64 is lighter for the same length of wrap due to the stretching of same.

Alternatively, the roll of stretched embossed film 64 may be applied by automated means as shown in Figure 9. More particularly, the automated means illustrated in Figure 10 shows a pallet wrapping machine 130 which is adapted to rotate about axis 132. The pallet wrapping machine includes a depending leg 134 having a dispensing apparatus 136 which may adapted to receive the stretched embossed roll 64 for dispensing stretched embossed film 138 about a load 140 mounted on a pallet 142.

Efficient and less complicated dispensing means 136 can be utilized in association with the roll of stretched embossed film 64.

Although the preferred embodiment as well as the operation and use of this invention has been specifically described in relation to the drawings, it should be understood that variations in the preferred embodiment could be easily achieved by a skilled man in the trade without departing from the scope of the invention. Accordingly the invention should not be understood as being limited to the exact form revealed in the drawings.

## Claims

1. Apparatus for rolling a plastics film comprising rollers and drive means therefor for stretching the film, CHARACTERISED IN THAT means are provided for folding the side edges (19, 21) of the film to strengthen said edges and minimize tearing thereof, and the stretching rollers including a textured roller (52) frictionally engageable with said film for stretching the film along its length and embossing a surface (58) thereof, means being provided for rolling the stretched and embossed film so as to trap air (62) in the rolled film.

2. Apparatus according to Claim 1, wherein the rolling means comprise a core for the rolled film rotatably engageable with the driving means.

3. Apparatus according to Claim 2 including oscillating means (124, 125) for oscillating the core between two limits as it rotatably receives the stretched and embossed film so as to minimise piling up of the folded edges.

4. Apparatus according to any preceding claim, wherein the textured roller means (52) comprises two textured rollers (84, 86) for stretching the plastics film.

5. Apparatus according to Claim 4 wherein each of the textured rollers comprise a cylindrical rubber surface having a patterned contour.

6. Apparatus according to any preceding claim, wherein the folding means is disposed in the path of the film upstream from the stretching rollers.

7. A method of producing a roll of stretched plastic film comprising feeding a web of film (50) having two opposite outermost side edges (15) and an unstretched original length to roller means (52); and stretching the film along the length thereof by the roller means,
CHARACTERISED IN THAT
the two opposite outermost side edges of the film are folded to strengthen said edges, and in that the roller means includes a textured roller which embosses the film during stretching, the stretched and embossed film being rolled onto a core to trap air in the rolled film.

8. A method according to Claim 7, including the step of oscillating the core between two limits when rolling said stretched embossed film onto said core to minimize piling up of said folded edges of said rolled film.

9. A method according to Claim 7 or Claim 8, wherein the side edges of the film are folded prior to the film being stretched and embossed.

## Patentansprüche

1. Vorrichtung zum Aufrollen einer Kunststoff-Folie, umfassend Walzen sowie einen Antrieb hierfür zum Strecken der Folie, dadurch gekennzeichnet, daß Mittel vorgesehen sind, um die Seitenkanten (19, 21) der Folie zu falzen, um die Kanten zu verstärken und deren Einreißen zu minimieren, daß die Streckwalzen eine strukturierte Walze (52) aufweisen, die mit der Folie in Reibeingriff bringbar ist, um diese über ihre Länge zu strecken und deren Oberfläche (58) zu prägen, und daß Mittel zum Aufrollen der gestreckten und geprägten Folie vorgesehen sind, um Luft (62) in der aufgerollten Folie einzuschließen.

2. Vorrichtung nach Anspruch 1, dadurch gekennzeichnet, daß die Rolleinrichtung für die aufgerollte Folie einen Kern aufweist, der an den Antrieb anschließbar ist.

3. Vorrichtung nach Anspruch 2 mit einer Oszilliereinrichtung (124, 125) zum Oszillieren des Kernes zwischen zwei Grenzwerten, wenn dieser die gestreckte und geprägte Folie drehend aufnimmt, um das Aufeinanderlegen der gefalzten Kanten zu minimieren.

4. Vorrichtung nach einem der vorausgegangenen Ansprüche, dadurch gekennzeichnet, daß die strukturierten Walzen (52) zwei strukturierte Walzen (84, 86) zum Strecken der Kunststoff-Folie aufweisen.

5. Vorrichtung nach Anspruch 4, dadurch gekennzeichnet, daß jede der strukturierten Walzen eine zylindrische Gummifläche mit einem Muster aufweist.

6. Vorrichtung nach einem der vorausgegangenen Ansprüche, dadurch gekennzeichnet, daß die Falzeinrichtung in der Bewegungsbahn der Folie stromaufwärts der Streckwalzen angeordnet ist.

7. Verfahren zum Herstellen einer Rolle aus gestreckter Kunststoff-Folie, umfassend das Zuführen einer Folienbahn (50) mit zwei einander gegenüberliegenden äußeren Seitenkanten (15) sowie einer ungestreckten Ausgangslänge zu einer Aufrolleinrichtung (52), und das Strecken der Folie über deren Länge durch die Aufrolleinrichtung, dadurch gekennzeichnet, daß die beiden einander gegenüberliegenden äußeren Seitenkanten der Folie gefalzt werden, um sie zu verstärken, daß die Aufrolleinrichtung eine strukturierte Rolle aufweist, die die Folie während des Streckens prägt, und daß die gestreckte und geprägte Folie auf einem Kern aufgerollt wird, um Luft in der aufgerollten Folie einzuschließen.

8. Verfahren nach Anspruch 7, umfassend den Schritt des Oszillierens des Kernes zwischen zwei Grenzwerten beim Aufrollen der gestreckten, geprägten Folie auf den Kern, um das Aufeinanderlegen der gefalzten Kanten der aufgerollten Folie zu minimieren.

9. Verfahren nach Anspruch 7 oder 8, wobei die Seitenkanten der Folie vor dem Strecken und Prägen gefalzt werden.

## Revendications

1. Dispositif pour enrouler un film ou feuil en matière plastique comprenant des rouleaux et des moyens d'entraînement de ces rouleaux pour étirer le film, caractérisé en ce que des moyens sont prévus pour replier les bords latéraux (19, 21) du film pour renforcer ledits bords et pour minimiser leur déchirement, et en ce que les rouleaux d'étirage comprennent un rouleau texturé (52) susceptible de venir en contact de friction avec ledit film pour étirer le film sur sa longueur et pour gaufrer ou nervurer l'une (58) de ses surfaces, des moyens étant prévus pour calandrer le film étiré et gaufré de façon à emprisonner de l'air (62) dans le film enroulé.

2. Dispositif selon la revendication 1, dans lequel les moyens d'enroulement comportent un tube d'enroulement pour le film enroulé susceptible de venir en contact rotatif avec les moyens d'entraînement.

3. Dispositif selon la revendication 2, comprenant des moyens oscillants (124, 125) pour faire osciller le tube d'enroulement entre deux limites de façon à ce qu'il reçoive à rotation le film étiré et gaufré de façon à minimiser l'empilement des bords repliés.

4. Dispositif selon l'une quelconque des revendications précédentes, dans lequel les moyens de rouleaux texturés (52) comportent deux rouleaux texturés (84, 86) pour étirer le film en matière plastique.

5. Dispositif selon la revendication 4, dans lequel chacun des rouleaux texturés comporte une surface cylindrique en élastomère présentant un contour à réseau.

6. Dispositif selon l'une quelconque des revendications précédentes, dans lequel les moyens pour replier sont disposés sur le trajet du film en amont des rouleaux d'étirage.

7. Un procédé de fabrication d'un rouleau de film ou feuil en matière plastique étirée comprenant l'avance d'une bande de film (50) présentant deux bords latéraux extrêmes opposés (15) et une longueur d'origine non étirée, vers des moyens de rouleaux (52); et l'étirage du film selon sa longueur par les moyens de rouleaux, caractérisé en ce que les deux bords latéraux extrêmes opposés du film sont repliés pour renforcer lesdits bords, et en ce que les moyens de rouleaux comportent un rouleau texturé qui provoque un gaufrage du film au cours de l'étirage, le film étiré et gaufré étant enroulé sur un tube d'enroulement pour emprisonner de l'air dans le film enroulé.

8. Un procédé selon la revendication 7, comprenant l'étape consistant à faire osciller le tube d'enroulement entre deux limites au cours de l'enroulement dudit film étiré gaufré sur ledit tube d'enroulement afin de minimiser l'empilement desdits bords repliés dudit film enroulé.

9. Un procédé selon la revendication 7 ou la revendication 8, dans lequel les bords latéraux du film sont repliés avant que le film ne soit étiré et gaufré.
